## Europäisches Patentamt

## European Patent Office

## Office européen des brevets

(19)

(11) Veröffentlichungsnummer: **0 195 081**
**B1**

(12) # EUROPÄISCHE PATENTSCHRIFT

(45) Veröffentlichungstag der Patentschrift:
07.12.88

(51) Int. Cl.⁴: **F 16 D  65/56**

(21) Anmeldenummer: **85905207.8**

(22) Anmeldetag: **12.09.85**

(86) Internationale Anmeldenummer:
**PCT/EP  85/00459**

(87) Internationale Veröffentlichungsnummer:
**WO  86/01866  (27.03.86** Gazette 86/7)

(54) **SELBSTTÄTIGE NACHSTELLVORRICHTUNG FÜR EINE BREMSE.**

(30) Priorität: **14.09.84  DE 8427187 U**

(43) Veröffentlichungstag der Anmeldung:
**24.09.86 Patentblatt 86/39**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**DE-A- 3 218 788**
**US-A- 2 264 454**
**US-A- 2 292 017**

(73) Patentinhaber: **LUCAS INDUSTRIES public limited company, Great King Street, Birmingham, B19 2XF West Midlands (GB)**

(72) Erfinder: **RATH, Heinrich-Bernhard, Sebastian-Kneipp-Strasse 73a, D-5414 Vallendar (DE)**
Erfinder: **HOLZ, Dietrich, Brunnenstrasse 4, D-5429 Niederbachheim (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine selbsttätige Nachstellvorrichtung für eine Bremse mit den Merkmalen des Oberbegriffs des Patentanspruches 1.

Eine solche selbsttätige Nachstellvorrichtung ist aus der DE-A-3 218 788 bekannt.

Bei einer anderen bekannten Nachstellvorrichtung (DE-A-3 244 872) weist ein schwenkbares scheibenartiges Strebenteil einen bezüglich der Schwenkachse exzentrisch angeordneten geriffelten Abschnitt auf, der quer zur Längsrichtung der Strebe bewegbar ist. Der geriffelte Abschnitt liegt bei gelöster Bremse an einem an dem zweiten Strebenteil ausgebildeten geriffelten Bereich an. Das scheibenartige Strebenteil greift mit einem Arm in eine Aussparung des Stegbleches ein. Bei einer Betätigung der Bremse entfernen sich die beiden Strebenteile voneinander, und das scheibenförmige Strebenteil ist über den Arm so schwenkbar, dass bei einem Lösen der Bremse ein von der Schwenkachse weiter entfernter Teil des geriffelten Abschnittes mit dem geriffelten Bereich des zweiten Strebenteils in Berührung kommt. Somit ist die Länge der Strebe vergrössert, um ein durch eine Abnützung des Reibbelages der Bremsbacken entstandenes Spiel selbsttätig auszugleichen.

Eine weitere Nachstellvorrichtung dieser Gattung (DE-A-3 019 223) weist eine Strebe auf, deren verstellbarer Abschnitt einen Gewindebolzen aufweist. Über ein mit dem Gewindebolzen verbundenes Ritzel ist die Länge der Strebe veränderbar, wenn das Ritzel über ein in dieses eingreifendes, schwenkbar gelagertes Nachstellglied verdreht wird. Die Länge der Strebe ist darüberhinaus auch über einen eingebauten Bimetallstreifen längenveränderbar. Damit gleicht die Nachstellvorrichtung ein durch eine Reibbelagabnutzung der Bremsbacken hervorgerufenes übermässiges Spiel zwischen dem Reibbelag und einer Bremstrommel aus, ohne dass ein durch die Ausdehnung der Bremstrommel infolge der Wärmeentwicklung während des Bremsens hervorgerufenes Spiel zu einer Längenveränderung der Strebe und damit zu einer Übernachstellung führt.

Es ist weiter eine selbsttätige Nachstellvorrichtung bekannt (DE-A-3 019 214), bei der über einen Bimetallstreifen das Nachstellglied ausser Eingriff gebracht werden kann, so dass ein durch die Wärmeausdehnung der Bremstrommel bedingtes Spiel nicht zu einer Längenveränderung der Strebe führt.

Das auszugleichende Spiel ist ein Lüftspiel, das der Differenz zwischen dem Bremstrommeldurchmesser und dem Durchmesser der Bremsbacken bei unbetätigter Bremse in nicht erwärmtem Zustand entspricht.

Der Durchmesser der Bremsbacken ist dabei über eine senkrecht auf der Verbindungslinie der hydraulischen Betätigungsvorrichtung mit dem Mittelpunkt der Bremstrommel stehenden Achslinie ermittelbar. Das Lüftspiel führt zu einem Verlustweg, der weiterhin erhöht werden kann durch die Wärmedehnung der Bremstrommel bei hohen Temperaturen sowie durch die elastische Verformung infolge hoher Bremsbetätigungskräfte. Dieser Anteil ist insbesondere bei Bremsen in gewichtssparender Leichtbauweise von Einfluss.

Es sind weiterhin die Bremsen bekannt, bei denen beim Betätigen der Bremse zusätzlich ein Verlustweg zurückgelegt wird, um abhängig von dem Wert der Bremsbetätigungskraft ein Schwenken des Nachstellhebels zu verhindern. Zum Erfüllen dieser Funktion ist dieser Verlustweg nur bei kalten Bremsen erforderlich; er bleibt bei den bekannten Ausführungen aber auch bei bereits erwärmter Bremse unverändert.

Im allgemeinen ist der Verlustweg bei einer nicht erwärmten Bremse von geringerer Bedeutung als derjenige bei einer stark erwärmten Bremse, da in diesem Fall die hydraulische Betätigungsvorrichtung mit einem höheren Druck beaufschlagt werden muss, damit eine durch die Erwärmung bedingte Minderung des Reibwertes eines Reibbelages ausgeglichen wird. Wird der Verlustweg zu gross, dann kann das von einem Hauptbremszylinder zugeführte Volumen der Bremsflüssigkeit nicht mehr ausreichen, um den erforderlichen Bremsdruck aufzubauen, so dass die Bremswirkung in diesem Fall begrenzt ist. Weiterhin ist während des Zurücklegens des Verlustweges ein Aufbau des Bremsbetätigungsdruckes nicht möglich, was zu einer Verzögerung des Eintritts der Bremswirkung führen kann.

Der Erfindung liegt die Aufgabe zugrunde, eine selbsttätige Nachstellvorrichtung für eine Bremse so weiterzubilden, dass die Nachstellung sowohl von der während des Bremsens erzeugten Temperatur, als auch der Betätigungskraft abhängt und der zur Verhinderung des Übernachstellens aufgrund des Betrages der Bremsbetätigungskraft erforderliche Verlustweg mit zunehmender Temperatur geringer wird.

Die Aufgabe ist bei einer selbsttätigen Nachstellvorrichtung der eingangs beschriebenen Gattung erfindungsgemäss dadurch gelöst, dass
– das Zwischenglied ein Sperrglied ist, dessen dem Kolben der hydraulischen Betätigungsvorrichtung zugewandte Seite im Ruhezustand der Bremse einen Überstand gegenüber der dem Kolben zugewandten Seite des Stegbleches aufweist, so dass die Bremsbetätigungskraft von dem Kolben über das Sperrglied auf das Stegblech solange übertragbar ist, bis der durch die Bewegung des Sperrgliedes verkleinerte Überstand aufgehoben ist und der Kolben an der ihm gegenüberliegenden Seite des Stegbleches anliegt,
– ein wärmeempfindliches Federelement mit dem Sperrglied zusammenwirkt, dessen Steifigkeit und/oder Form mit zunehmender Temperatur der Bremse so veränderbar ist, dass sich eine Bewegung des Sperrgliedes so ergibt, dass der Überstand verkleinert ist,
– das Sperrglied so mit einem den Abschnitt des einen Strebenteils verstellenden Nachstellglied verbindbar ist, dass bei Erreichen eines vorgebbaren temperaturabhängigen Betrages für die Bremsbetätigungskraft und/oder eines vorgebbaren Wertes für die Temperatur eine Bewegung des verstellbaren Abschnittes zur Veränderung der Länge der Strebe verhindert wird.

Durch die Übertragung der Bremsbetätigungskraft von einem Kolben auf die während des Ruhezustandes der dabei kalten Bremse einen Überstand bildende Seite eines Sperrgliedes wird zumindest ein Teil des des Sperrgliedes bewegt. Abhängig von einer dadurch bedingten Verschiebung des Sperrgliedes, und somit abhängig von dem Betrag der Bremsbetätigungskraft ist das Sperrglied mit dem Nachstellglied verbindbar, so dass bei Erreichen eines vorgebbaren Wertes für die Bremsbetätigungskraft eine Veränderung der Länge der Strebe verhindert ist.

Dadurch, dass ein wärmeempfindliches Federelement vorhanden ist, dessen Steifigkeit und/oder Form mit zunehmender Temperatur der Bremse veränderbar ist und das mit dem Sperrglied zusammenwirkt, erfolgt die Verschiebung des Sperrgliedes auch abhängig von Temperaturänderungen. Nach Erreichen einer vorgebbaren Temperatur kommt das Sperrglied mit dem Nachstellhebel in Eingriff, so dass auch dann, wenn der Wert der Bremsbetätigungskraft noch unterhalb des vorgebbaren Wertes liegt, dadurch ebenfalls eine Veränderung der Länge der Strebe verhindert ist.

Das Zusammenwirken des wärmeempfindlichen Federelementes mit dem Sperrglied bewirkt weiterhin, dass mit zunehmender Temperatur der Betrag der Betätigungskraft absinkt, bei dessen Erreichen das Sperrglied mit dem Nachstellglied in Eingriff kommt, so dass eine Längenveränderung der Strebe verhindert ist. Es ergibt sich somit eine Überlagerung der Einflüsse der Bremsbetätigungskraft und der Temperatur der Bremse, so dass durch die Summe dieser Einflüsse das Sperrglied mit dem Nachstellglied in Eingriff gebracht wird, um bei Erreichen eines vorgebbaren Wertes für die Bremsbetätigungskraft und/oder Temperatur eine Übernachstellung der Länge der Strebe zu verhindern.

Durch das Zusammenwirken des wärmeempfindlichen Federelementes mit dem Sperrglied wird weiterhin erreicht, dass der Überstand der dem Kolben benachbarten Seite des Sperrgliedes bei steigender Temperatur verkleinert und bei Erreichen einer vorgebbaren Temperatur gänzlich aufgehoben wird. Dadurch wird der durch den Überstand bedingte Verlustweg mit steigender Temperatur verringert.

Damit wird erreicht, dass auch bei hohen Temperaturen die Bremse schnell anspricht und die Bremswirkung erhalten bleibt. Hierzu ist es nämlich erforderlich, dass der hydraulische Druck in der Betätigungsvorrichtung erhöht wird, um einen durch eine Minderung des Reibwertes eines Reibbelages bedingten Abfall der Bremswirkung auszugleichen. Ein zu grosser Verlustweg würde dem entgegenstehen, da das von einem Hauptbremszylinder erbrachte Volumen der Hydraulikflüssigkeit nicht mehr ausreichend wäre, um den erforderlichen Druck aufbauen zu können, so dass die Bremswirkung damit begrenzt wäre. Weiterhin kann während des Zurücklegens des Verlustweges der Bremsbetätigungsdruck nicht gesteigert werden, so dass die erfindungsgemässe Verringerung des Verlustweges zu einem schnelleren Ansprechen der Bremse und zu einer Erhöhung der Wirksamkeit der Bremse führt, weil der Bremsbetätigungsdruck schneller erhöht werden kann. Die aus einer Überbrückung eines Verlustweges resultierende Begrenzung der Höhe des Bremsbetätigungsdruckes entfällt ebenso.

Bei einem bevorzugten Ausführungsbeispiel ist das Sperrglied als Sperrhebel ausgebildet, der mit dem Stegblech über einen Bolzen schwenkbar verbunden ist. Die Verbindung des Sperrgliedes mit dem als Nachstellhebel ausgebildeten Nachstellglied ergibt sich dabei in besonders wirksamer Weise durch das Eingreifen eines an dem Sperrhebel ausgebildeten Sperrzahnes in eine an dem Nachstellhebel ausgebildete Sperrverzahnung. Das mit dem Sperrglied zusammenwirkende wärmeempfindliche Federelement besteht aus einem oval gebogenen Bimetallstreifen, dessen äusserer Metallstreifen sich mit zunehmender Temperatur stärker als der innere Metallstreifen ausdehnt, so dass die Steifigkeit der Feder mit steigender Temperatur abnimmt. Dadurch, dass die beiden Enden des Bimetallstreifens einander überlappend eine Längsseite des Ovals bilden, wird erreicht, dass sich die Enden auch bei sehr hohen Temperaturen frei krümmen können, so dass keine plastische Verformungen auftreten.

Bei einem weiteren bevorzugten Ausführungsbeispiel wirkt eine Torsionsfeder auf den Sperrhebel zur Herstellung des Überstandes des Sperrhebels gegenüber dem Stegblech. Entgegen der Wirkung der Torsionsfeder wirken Bimetall-Tellerfedern, die hintereinander angeordnet sind, gegen den Sperrhebel. Die Bimetall-Tellerfedern, die sich an einem Belagträgerblech abstützen, sind derart, dass sich ihre axiale Länge mit steigender Temperatur erhöht. Dadurch wird unter dem Einfluss einer Temperatursteigerung, ebenso wie unter dem Einfluss einer Bremsbetätigungskraft, der Sperrhebel so geschwenkt, dass sich sein Sperrzahn der Sperrverzahnung des Nachstellhebels nähert und beim Erreichen vorgebbarer Werte für die Temperatur und/oder den Betätigungsdruck eine Schwenkbewegung des Nachstellhebels verhindert.

Da auch nach dem Eingreifen des Sperrzahnes in die Sperrverzahnung die Bimetall-Tellerfedern das Bestreben haben, sich bei einer Temperatursteigerung in axialer Richtung auszudehnen, ist zweckmässigerweise der Sperrzahn elastisch mit dem Sperrhebel verbunden, um eine plastische Verformung der Bimetall-Tellerfedern zu verhindern.

Bei einem weiteren bevorzugten Ausführungsbeispiel ist das wärmeempfindliche Federelement als Teil des Sperrgliedes ausgebildet. Das vorgespannte Federelement weist dabei einen U-förmigen Bereich auf, in dessen mittlerem Abschnitt sich freistehende Lippen mit einander zugewandten konvex gekrümmten Flächen befinden zur Aufnahme eines Endabschnittes einer Verbindungsstange, deren anderes Ende mit dem Nachstellhebel verbunden ist. Durch diese Lippen ist die Verbindungsstange klemmbar, wenn die auf den Überstand des Federelementes einwirkende Bremsbetätigungskraft einen vorgebbaren Wert erreicht und/oder wenn infolge einer Erhöhung der Temperatur der Zwischenraum zwischen den beiden Lippen des U-förmigen Bereiches, der durch einen Bimetallstreifen gebildet ist, verkleinert wird.

Bei einem weiteren bevorzugten Ausführungsbeispiel weist die Strebe ein als Nachstellglied ausgebildetes scheibenförmiges erstes Strebenteil auf, das in einer Richtung quer zur Längsrichtung der Strebe mit einem zweiten stabförmigen Strebenteil schwenkbar und gegen die Kraft einer Feder verschiebbar verbunden ist. Das erste Strebenteil hat eine zu der Schwenkachse exzentrische Aussenfläche mit einem geriffelten Abschnitt, der im Ruhezustand der Bremse an einem geriffelten Bereich des zweiten Strebenteils anliegt. Der erste Strebenteil ist über einem Arm, der in eine Aussparung des Stegbleches eingreift, beim Betätigen der Bremse schwenkbar. Beim Betätigen der Bremse findet weiterhin eine Relativbewegung des ersten und des zweiten Strebenteils voneinander statt. Infolge des Schwenkens des ersten Strebenteils während des Betätigens der Bremse liegt nach dem anschliessenden Lösen der Bremse zur Verlängerung der Strebe ein von der Schwenkachse weiter entfernter Bereich des geriffelten Abschnittes an dem geriffelten Bereich des zweiten Stegteils an. Um abhängig von dem Betrag der Bremsbetätigungskraft und/oder der Temperatur zu verhindern, dass sich die Strebe verlängert, ist ein Sperrglied schwenkbar mit dem Stegblech verbunden, das einen Sperrzahn aufweist, der mit einer an dem ersten Strebenteil ausgebildeten Sperrverzahnung einrastbar ist, um ein Schwenken dieses Strebenteils zu verhindern. Dadurch, dass das wärmeempfindliche Federelement an dem Steg angelenkt ist, und gegen das Sperrglied wirkt, wird der Überstand in Abhängigkeit von der Temperatur vermindert und die Abhängigkeit des Betrages der Bremsbetätigungskraft, bei deren Erreichen eine Längenveränderung der Strebe verhindert ist, von der Temperatur hergestellt.

Es hat sich als zweckmässig erwiesen, einen Überstand vorzugeben, der in der Ruhelage der Bremse etwa 0,2 mm beträgt. Es ist ferner vorteilhaft, durch die Wirkung des wärmeempfindlichen Elementes diesen Überstand aufzuheben, wenn die Temperatur einen Wert von etwa 150 °C erreicht hat. Als Grösse für die Vorspannkraft des Federelements hat sich ein Betrag von etwa 400N als zweckmässig erwiesen.

Weitere vorteilhafte Ausgestaltungen der Ausführungsbeispiele ergeben sich aus den Unteransprüchen.

Ausführungsbeispiele der Erfindung werden im folgenden anhand schematischer Zeichnungen mit weiteren Einzelheiten erläutert. Es zeigen:

Fig. 1 eine Vorderansicht eines ersten Ausführungsbeispiels;

Fig. 2 eine unvollständig dargestellte Vorderansicht eines zweiten Ausführungsbeispiels einer Nachstellvorrichtung;

Fig. 3 eine Draufsicht des in Fig. 2 dargestellten Ausführungsbeispiels;

Fig. 4 eine unvollständig dargestellte Vorderansicht eines dritten Ausführungsbeispiels einer Nachstellvorrichtung;

Fig. 5 eine Draufsicht des in Fig. 4 dargestellten Ausführungsbeispiels;

Fig. 6 eine unvollständig dargestellte Vorderansicht eines vierten Ausführungsbeispiels einer Nachstellvorrichtung;

Fig. 7 eine Draufsicht des in Fig. 6 dargestellten Ausführungsbeipiels.

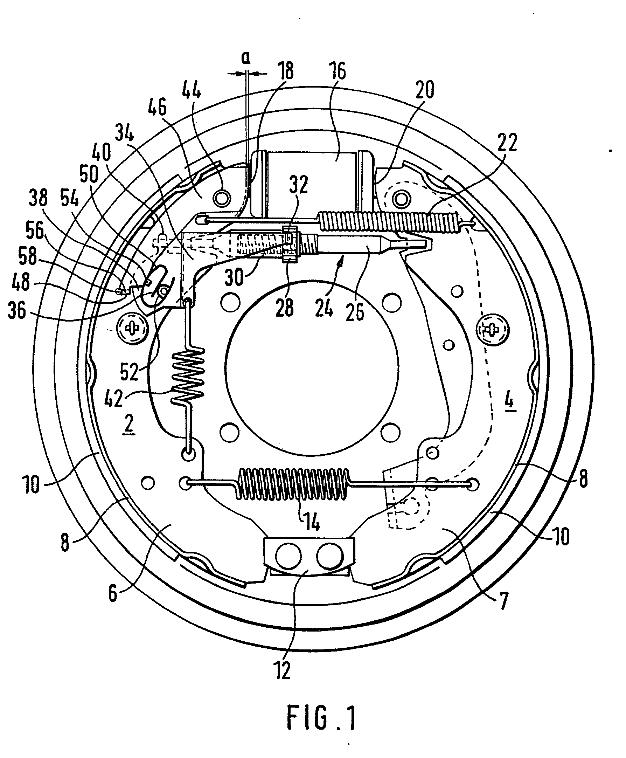

Die in Fig. 1 dargestellte Bremse weist eine erste Bremsbacke 2 und eine zweite Bremsbacke 4 auf, mit je einem Stegblech 6, 7 an dessen radial äusserem Ende sich jeweils ein Belagträgerblech 8 anschliesst, an dem der Bremsbelag 10 befestigt ist. Die beiden Bremsbacken 2, 4 stützen sich mit je einem Ende an einem Widerlager 12 ab, gegen das sie durch mindestens eine Rückstellfeder 14 vorgespannt sind. Zwischen den dem Widerlager 12 gegenüberliegenden Enden der Bremsbacken 2, 4 erstreckt sich eine hydraulische Betätigungsvorrichtung 16 mit zwei Kolben 18, 20, von denen der Kolben 20 auf das gegenüberliegende Ende des Stegbleches 7 des zweiten Bremsbackens 4 wirkt. Der hydraulischen Betätigungsvorrichtung 16 benachbart ist radial einwärts eine Backenrückzugsfeder 22 angeordnet, die mit je einem Ende mit einem der Bremsbacken 2, 4 verbunden ist. Radial einwärts von der Backenrückzugsfeder 22 ist parallel zu der Achse der Betätigungsvorrichtung 16 zwischen den beiden Bremsbacken 2, 4 eine Strebe 24 angeordnet, deren beide Enden gabelförmig ausgebildet sind zum Eingreifen in an den Stegblechen ausgebildete Kerben. Die Strebe 24 weist eine Spindel 26 auf, die mit dem Stegblech 7 in Verbindung steht, und mit der ein Ritzel 28 verbunden ist. An der der Spindel 26 gegenüberliegenden Seite des Ritzels 28 schliesst sich eine Hülse 30 der Strebe 24 an.

In das Ritzel 28 greift eine Klinke 32 ein, die an einem Ende eines Nachstellhebels 34 ausgebildet ist, der über einen Bolzen 36 schwenkbar mit dem Stegblech 6 verbunden ist. An dem dem Bolzen 36 benachbarten Ende weist der Nachstellhebel 34 einen kreissektorförmigen Abschnitt auf, der mit einer Sperrverzahnung 38 versehen ist. An dem dem Steg 24 benachbarten Ende des kreissektorförmigen Abschnitts weist der Nachstellhebel einen Vorsprung 40 auf, der in einem Schlitz des gabelförmigen Endes der Hülse 30 geführt ist. Mit dem Nachstellhebel 34 ist ein Ende einer Nachstellfeder 42 verbunden, deren anderes Ende an dem Stegblech 6 befestigt ist.

An dem dem Kolben 18 benachbarten Ende des Stegbleches 6 ist mit diesem schwenkbar um einen Bolzen 44 ein Sperrhebel 46 gelagert. Das dem Kolben 18 zugewandte Ende des Sperrhebels 46 weist eine gekrümmte Oberfläche auf, die solange sich die Bremse im Ruhezustand befindet und nicht wesentlich erwärmt ist, um einen vorgebbaren Überstand a über das dem Kolben 18 gegenüberliegende Ende des Stegbleches 6 übersteht. An seinem anderen Ende weist der Sperrhebel 46 einen Sperrzahn 48 zum Eingreifen in die Sperrverzahnung 38 des Nachstellhebels 34 auf.

Zwischen dem Bolzen 36 und der ihm gegenüberliegenden Seite des Sperrhebels 46 erstreckt sich eine aus einem Bimetallstreifen oval gebogene Feder 50. Die beiden Enden des Bimetallstreifens bilden einander im Abstand überlappend eine Längsseite des Ovals, die über eine an dem äusseren Ende des Bimetallstreifens ausgebildete Öse 52 mit dem Bolzen 36 verbunden ist. Die der Öse 52 gegenüberliegende Längsseite des Ovals liegt an einer Seite des Sperrhebels 46 an und weist eine Aussparung auf, in die ein an dem Sperrhebel 46 ausgebildeter Ansatz 54 zum Herstellen einer Verbindung mit der Feder 50 ragt. Dem Sperrzahn 48 benachbart ist an dem Sperrhebel 46 ein umgebogener Bereich vorhanden, der als Anschlag 56 zum Zusammenwirken mit einem Anschlagbolzen 58, der mit dem Stegblech 6 verbunden ist, so zusammenwirkt, dass die Feder 50, solange sie sich in kaltem Zustand befindet, mit etwa 50N vorgespannt ist.

Die Bimetallstreifen der Feder 50 sind so angeordnet, dass sich der äussere Metallstreifen mit zunehmender Temperatur mehr ausdehnt als der innere Metallstreifen, so dass mit steigender Temperatur die Kennlinie der Feder 50 entsprechend einer Verminderung der Steifigkeit abfällt. Die sich überlappenden Enden der Feder 50 können sich auch bei sehr hohen Temperaturen frei verschieben, so dass keine plastische Verformung der Feder 50 auftritt.

Das dem Kolben 18 gegenüberliegende Ende des Sperrhebels 46, dessen Überstand a bei gelöster kalter Bremse etwa 0,2 mm beträgt, liegt in diesem Zustand ständig an dem Kolben 18 an. Eine von dem Kolben 18 aufgebrachte Bremsbetätigungskraft wirkt, solange die Temperatur der Bremse einen vorgebbaren Wert nicht übersteigt, über den Sperrhebel 46 und den Bolzen 44 auf das Stegblech 6, wodurch der Bremsbelag 10 gegen eine nicht dargestellte Bremstrommel gepresst wird. Die in den Sperrhebel 46 eingeleitete Bremsbetätigungskraft bewirkt neben dem Anpressen des Bremsbelages 10 auch ein Schwenken des Sperrhebels 46 um den Bolzen 44, wobei der Schwenkbewegung die Federkraft der Feder 50 entgegenwirkt.

Die auf die Bremsbacken 2, 4 über die Kolben 18, 20 wirkenden Bremsbetätigungskräfte ermöglichen ein Schwenken des Nachstellhebels 34, durch die von der Nachstellfeder 42 ausgeübte Zugkraft, weil dann durch den Vorsprung 40 der Nachstellhebel 34 nicht mehr in seiner ursprünglichen Lage in dem gabelförmigen Ende der Hülse 30 gehalten ist. Das Schwenken des Nachstellhebels 34 kann dazu führen, dass über die Klinke 32 das Ritzel 28 weitergedreht und so die Länge der Strebe 24 in der z. B, in der DE-A-3 218 788 beschriebenen Weise verlängert wird. Durch die Verlängerung der Strebe 24 wird eine Vergrösserung des Lüftspiels infolge einer Abnützung der Bremsbeläge 10 verhindert. Mit Lüftspiel ist die Differenz des Durchmessers der Bremstrommel mit dem Durchmesser der Bremsbacken bei unbetätigter kalter Bremse bezeichnet. Der Durchmesser der Bremsbacken 2, 3 wird dabei über eine senkrecht zu der Verbindungslinie zwischen der Betätigungsvorrichtung 16 und dem Widerlager 12 stehenden Achslinie gemessen.

Um zu vermeiden, dass eine Aufweitung der Bremstrommel infolge elastischer Verformung aufgrund grosser Bremsbetätigungskräfte zu einer Vergrösserung der Länge der Strebe 24 führt, greift, nachdem die Bremsbetätigungskraft einen vorgebbaren Wert erreicht hat, der Sperrzahn 48 in die Sperrverzahnung 38 ein, wodurch eine Schwenkbewegung des Nachstellhebels 34 vermieden ist.

Dem Eingreifen des Sperrzahnes 48 in die Sperrverzahnung 38 wirkt die Federkraft der Feder 50 entgegen. Da die Steifigkeit der Feder mit steigender Temperatur abnimmt, sinkt mit dieser auch der Wert für die von dem Kolben 18 aufzubringende Bremsbetätigungskraft, bei der der Sperrzahn 48 in die Sperrverzahnung 38 eingreift, um eine Vergrösserung der Länge der Strebe 24 zu verhindern.

Infolge der Verminderung der Steifigkeit der Feder 50 mit steigender Temperatur wird durch die Feder 50 einem möglichen Schwenken des Sperrhebels 46 um den Bolzen 44 mit steigender Temperatur auch weniger Widerstand entgegen gesetzt. Ein derartiges Schwenken des Sperrhebels 46 wird auch bei gelöster Bremse durch die Wirkung des hydrostatischen Druckes sowie durch die Federkraft auf den Kolben 18 gegen die Backenrückzugsfeder 22 einer nicht dargestellten, zwischen den beiden Kolben 18, 20 angeordneten Feder angestrebt. Das Schwenken des Sperrhebels 46 führt zu einer Verkleinerung des Überstandes a. Überschreitet die Temperatur der Bremse einen vorgebbaren Wert, der bei etwa 150 °C liegt, dann ist die Steifigkeit der Feder 50 soweit abgesunken, dass ein Schwenken des Sperrhebels 46 derart auftritt, dass der Überstand a vollständig reduziert ist, so dass der Kolben 18 unmittelbar an der ihm zugewandten Seite des Stegbleches 6 anliegt. Bei der Betätigung einer erwärmten Bremse ist somit infolge der Minderung des Überstandes a nur noch ein gegenüber dem kalten Zustand der Bremse verminderter durch den Überstand bedingter Verlustweg zu überwinden, der dann, wenn die Temperatur der Bremse einen vorgebbaren Wert erreicht hat, gänzlich aufgehoben ist.

Eine bei stark erwärmten Bremsen zum Ausgleich des reduzierten Reibwertes des Reibbelages 10 notwendige Erhöhung des Druckes in der hydraulischen Bremsbetätigungsvorrichtung ist damit in wirksamer Weise möglich, ohne dass zunächst ein Verlustweg durch eine Erhöhung des Volumens der Hydraulikflüssigkeit zurückgelegt werden muss. Das durch die von dem Kolben 18 übertragene Bremsbetätigungskraft hervorgerufene Schwenken des Sperrhebels 46 um den Bolzen 44, durch das bei Erreichen eines vorgebbaren Wertes für die Bremsbetätigungskraft ein Schwenken des Nachstellhebels 34 verhindert wird, ist gekoppelt mit einer Abnahme der Steifigkeit der Feder 50 mit steigender Temperatur. Das zum Eingreifen des Sperrzahnes 48 in die Sperrverzahnung 38 erforderliche Schwenken des Sperrhebels 46 wird bei steigenden Temperaturen somit bereits durch niedrigere unterhalb des vorgebbaren Wertes liegende Bremsbetätigungskräfte hervorgerufen, so dass sich die gewünschte additive Verknüpfung der Einflüsse der Bremsbetätigungskraft und der Temperatur der Bremse ergibt, die bei dem Erreichen vorgebbarer Werte für die Bremsbetätigungskraft und/oder Temperatur dazu führt, dass bei betätigter Bremse ein Schwenken des Nachstellhebels 34 und somit eine Längenveränderung der Strebe 24 verhindert ist.

In vergleichbarer Weise sind auch bei den übrigen Ausführungsbeispielen die Einflüsse der Beträge der Temperatur und der Bremsbetätigungskraft in ihrer Wirkung auf ein Sperrglied überlagert, so dass abhängig von diesen Einflussgrössen ein Übernachstellen verhindert wird. Durch eine Minderung der Grösse des Überstandes a mit steigender Temperatur wird dabei ebenfalls der durch diesen Überstand bedingte Verlustweg verkleinert. Die Wirksamkeit der Bremse bleibt somit einschliesslich ihres schnellen Ansprechens auch bei hohen Temperaturen erhalten.

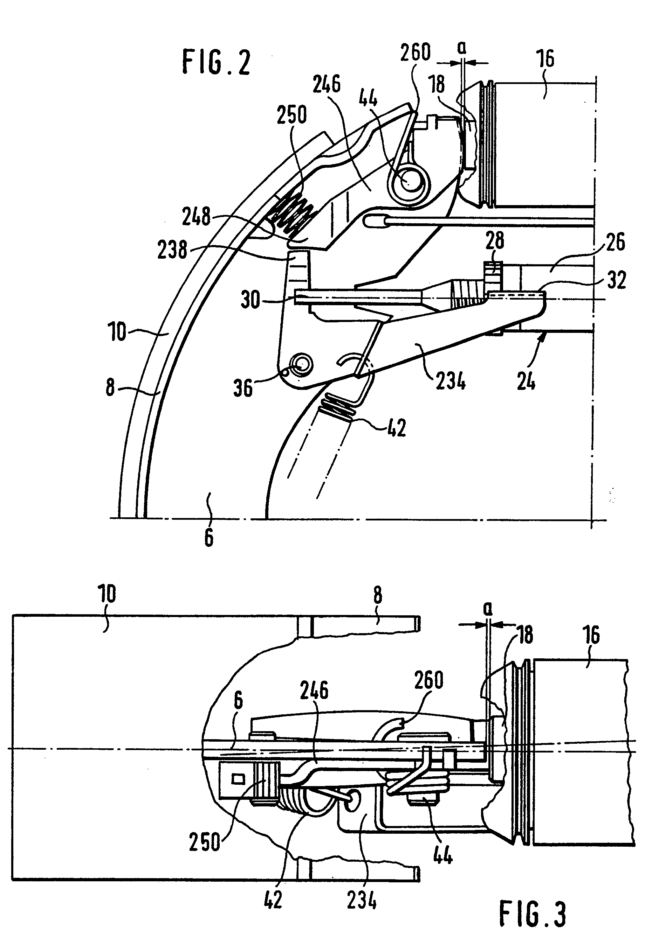

In den Fig. 2 und 3 ist ein zweites Ausführungsbeispiel einer Nachstellvorrichtung dargestellt; mit dem ersten Ausführungsbeispiel übereinstimmende Bauteile sind mit gleichen Bezugsziffern gekennzeichnet. Bei diesem Ausführungsbeispiel ist ein Nachstellhebel 234, dessen Klinke 32 in das Ritzel 28 der Strebe 24 eingreift, um einen Bolzen 36 schwenkbar gelagert. Eine Nachstellfeder 42 ist mit einem Ende an dem Nachstellhebel 234 und mit dem anderen Ende an dem Stegblech 6 befestigt. Der Nachstellhebel 234 weist eine Sperrverzahnung 238 auf, der ein entsprechend ausgebildeter Sperrzahn 248 des Sperrhebels 246 gegenüberliegt. Dem Sperrzahn 248 benachbart sind Bimetall-Tellerfedern 250 so hintereinander angeordnet, dass das Federpaket mit einem Ende auf den Sperrhebel 246 und mit seinem anderen Ende auf das Belagträgerblech 8 wirkt.

Im Ruhezustand der dabei kalten Bremse weist der Sperrhebel 246 einen Überstand der Grösse a auf, der etwa 0,2 mm beträgt, so dass der Kolben 18 an einer Fläche des Sperrhebels 246 anliegt. Über eine den Bolzen 44 umschliessende Torsionsfeder 260, die sich mit einem Ende an dem Stegblech 6 und dem anderen Ende an dem Sperrhebel 246 abstützt, wird der Überstand a gegen die Vorspannkraft der Bimetall-Tellerfedern 250 aufrechterhalten.

Die axiale Länge der Bimetall-Tellerfedern 250 nimmt mit steigender Temperatur zu, so dass dann ein Schwenken des Sperrhebels 246 erfolgt, als dessen Folge sich der Überstand a verkleinert und der Sperrzahn 248 sich der Sperrverzahnung 238 nähert. Bei Erreichen eines vorgebbaren Wertes für die Temperatur, der bei etwa 150 °C liegt, greift der Sperrzahn 248 in die Sperrverzahnung 238 ein und verhindert so ein Schwenken des Nachstellhebels 234, so dass die Länge der Strebe 24 nicht verändert wird. Durch die Verminderung des Überstandes a mit steigender Temperatur wird weiterhin eine Verminderung des durch den Überstand bedingten Verlustweges erreicht, der dann, wenn der Überstand völlig eliminiert ist, gänzlich aufgehoben ist.

Da auch nach dem Eingreifen des Sperrzahnes 248 in die Sperrverzahnung 238 bei einem weiteren Temperaturanstieg die Bimetall-Tellerfedern 250 bestrebt sind, sich weiter auszudehnen, ist es zweckmässig, den Sperrzahn 248 in nicht näher dargestellter Weise elastisch mit dem Sperrhebel 246 zu verbinden, so dass die weitere Ausdehnung der Bimetall-Tellerfedern nicht zu deren plastischen Verformung führt.

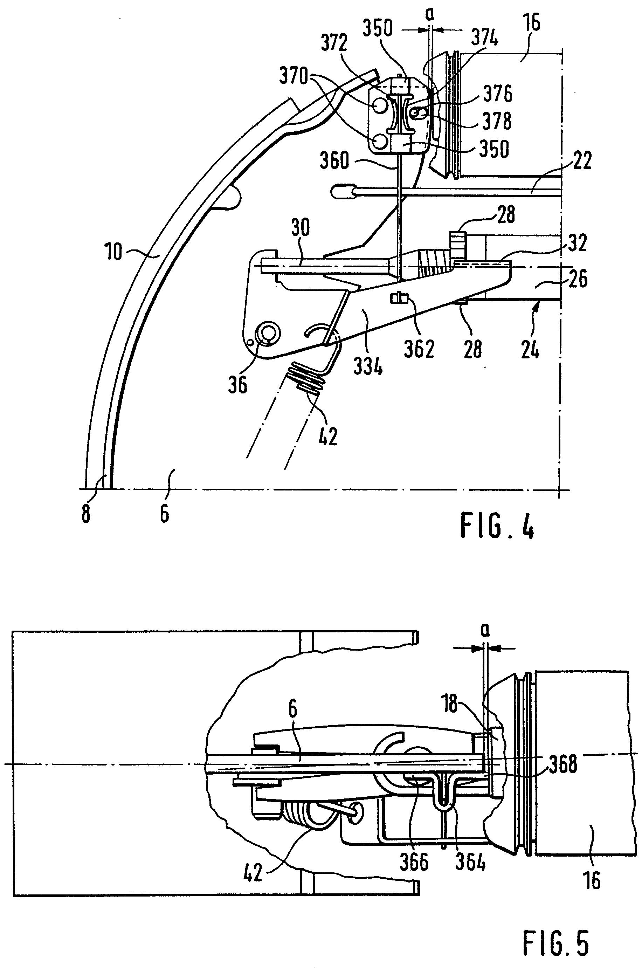

Bei dem in Fig. 4 und 5 dargestellten dritten Ausführungsbeispiel sind mit dem ersten Ausführungsbeispiel übereinstimmende Bauteile mit gleichen Bezugsziffern gekennzeichnet. Bei diesem Ausführungsbeispiel weist das Sperrglied das aus einem Bimetallstreifen bestehende Federelement 350 sowie eine Verbindungsstange 360 auf, die sich in einer Richtung senkrecht zu der Achse des Kolbens 18 erstreckt und ein hakenförmiges Ende hat, das in eine Aussparung 362 des Nachstellhebels 334 eingreift. Das andere, gerade ausgebildete Ende der Verbindungsstange 360 wird von einem sich in einer Richtung senkrecht zur Achse des Kolbens 18 erstreckenden, U-förmig ausgebildeten Bereich 364 des Federelementes 350 umfasst.

Der U-förmige Bereich 364 des Federelementes 350 weist mit seinem offenen Ende zu dem Stegblech 6. An jedem Schenkel des U-förmigen Bereiches 364 schliesst sich ein parallel zu dem Stegblech 6 verlaufender Flansch 366, 368 an. Der dem Kolben 18 abgewandte Flansch 366 ist mit zwei Nieten 370 mit dem Stegblech 6 vernietet. Der dem Kolben 18 gegenüberliegende Flansch 368 weist gegenüber dem Ende des Stegbleches 6 einen Überstand auf, der im Ruhezustand bei kalter Bremse einen Wert von etwa 0,2 mm erreicht.

Der U-förmige Bereich 350 ist in einem mittleren Abschnitt an seinen den Flanschen 366, 368 gegenüberliegenden Enden geöffnet, so dass die Verbindungsstangen 360 dort zwischen zwei Lippen 372, 374 verlaufen. Jede der beiden Lippen 372, 374 ragt frei von einem der Flansche 366, 368 weg und ist schalenförmig um ihre Längsachse so gekrümmt, dass die konvex gekrümmten Aussenflächen einander benachbart einen Zwischenraum zur Aufnahme der Verbindungsstangen 360 bilden.

Die Feder 350 ist in kaltem Zustand mit etwa 400N vorgespannt durch einen mit dem Stegblech 6 verbundenen Stift 376, der als Anschlag für das Federelement 350 in eine langlochförmige Aussparung 378 in den Flansch 368 eingreift.

Dem Einwirken der Bremsbetätigungskraft auf den Flansch 368 folgt das Verschieben dieses Flansches, so dass der Abstand zwischen den Lippen 372, 374 verkleinert wird. Wenn die Bremsbetätigungskraft einen vorgebbaren Wert überschreitet, führt dies zu einem Klemmen der Verbindungsstange 360, so dass der Nachstellhebel 334 nicht schwenken kann. Ebenso wie ein auf den Flansch 368 aufgebrachter Betätigungsdruck führt auch eine Temperaturerhöhung zu einem Verkleinern des Abstandes zwischen den Lippen 372, 374.

Wie bei den bereits zuvor beschriebenen Ausführungsbeispielen trägt auch eine Erhöhung der Temperatur der Bremse dazu bei, dass mit steigender Temperatur der Überstand a und damit der von dem Kolben 18 zurückzulegende Verlustweg vermindert bzw. bei Erreichen eines Wertes von etwa 150 °C völlig aufgehoben wird. Weiterhin wird, wenn die Temperatur einen vorgebbaren Wert erreicht, ein Schwenken des Nachstellhebels 364 verhindert und mit steigender Temperatur der Wert für die Betätigungskraft gemindert, bei deren Erreichen ein Schwenken des Nachstellhebels 364 verhindert wird.

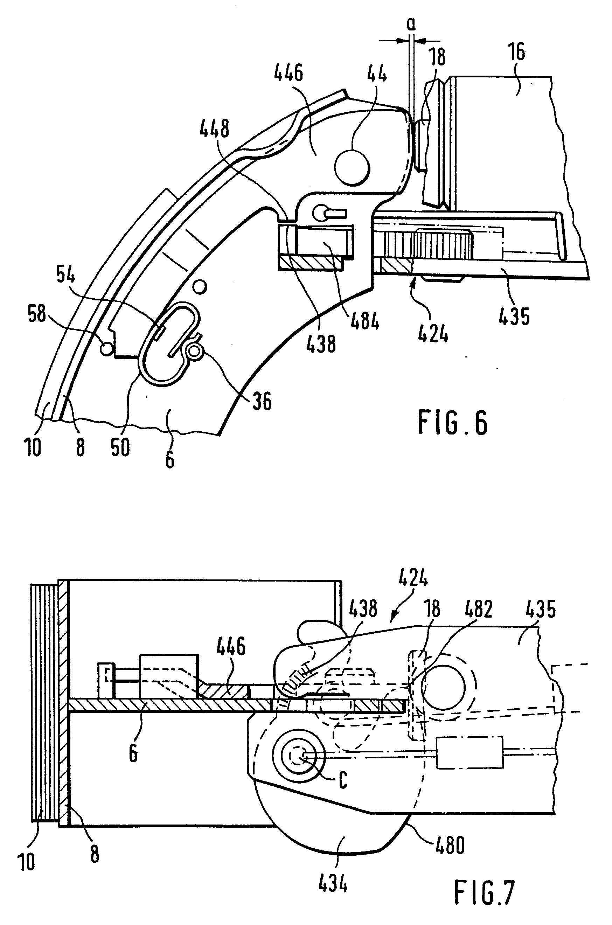

In den Fig. 6 und 7 ist ein viertes Ausführungsbeispiel dargestellt; mit dem ersten Ausführungsbeispiel übereinstimmende Bauteile sind mit gleichen Bezugsziffern gekennzeichnet. Die diesem Ausführungsbeispiel zugrunde liegende Nachstellung weist eine Strebe 424 mit einem scheibenförmigen ersten Strebenteil 434 und einem stabförmigen zweiten Strebenteil 435 auf. Das Strebenteil 434 ist schwenkbar mit dem Strebenteil 435 verbunden. Es weist eine um die Schwenkachse C exzentrische Aussenfläche auf mit einem geriffelten Bereich 480, der im Ruhezustand der Bremse mit einem geriffelten Bereich 482 des zweiten Strebenteils 435 in Verbindung ist. Bei einem Betätigen der Bremse bewegen sich die beiden Strebenteile 434, 435 voneinander. Das Strebenteil 434, dessen Drehachse gegen die Kraft einer Feder in nicht dargestellter Weise in dem zweiten Strebenteil 435 verschiebbar angeordnet ist, wird beim Betätigen der Bremse durch einen in eine Aussparung des Stegblechs 6 eingreifenden Arm 484 geschwenkt. Beim anschliessenden Lösen der Bremse kommt ein von der Schwenkachse C weiter entfernter Bereich des geriffelten Abschnittes 480 des ersten Strebenteils 434 mit dem geriffelten Bereich 482 des zweiten Stegteils in Verbindung, so dass die Strebe 424 verlängert ist. Die grundsätzliche Arbeitsweise dieser Nachstellvorrichtung ist ausführlich in der DE-A-3 244 872 beschrieben. Um abhängig von einem vorgebbaren Wert für die Bremsbetätigungskraft und/oder Temperatur eine Längenveränderung der Strebe 424 zu verhindern, greift ein an einem Sperrglied 446 ausgebildeter Sperrzahn 448 in eine an dem ersten Strebenteil 434 ausgebildete Sperrverzahnung 438 ein. Damit wird ein Schwenken des Sperrgliedes 434 verhindert. Das Sperrglied 446 ist über einen Bolzen 44 schwenkbar mit dem Steg 6 verbunden und weist einen Überstand a gegenüber der dem Kolben 18 benachbarten Seite des Stegbleches auf. An der dem Überstand a gegenüberliegenden Seite des Sperrgliedes 446 greift an diesem eine wärmeempfindliche ovale Feder 50 an, die über einen Bolzen 36 mit dem Stegblech 6 verbunden und über das Sperrglied 446 gegen einen Bolzen 58 vorgespannt ist. Das Zusammenwirken der Feder 50 mit dem Sperrglied 446 erfolgt entsprechend der für das erste Ausführungsbeispiel beschriebenen Weise.

**Patentansprüche**

1. Selbsttätige Nachstellvorrichtung für eine Bremse, insbesondere eine Kraftfahrzeugbremse, bei der einer Bremsbetätigungsvorrichtung (16) eine Strebe (24) funktionsmässig parallelgeschaltet ist, deren wirksame Länge von der Relativstellung zweier gegeneinander verstellbarer Strebenteile (26, 30) abhängt, von denen eines (26) einen verstellbaren Abschnitt aufweist, mit dem bei Betätigung der Bremse die Strebe (24) verlängerbar ist und der mit mindestens einem Zwischenglied (46) zusammenwirkt, das zumindest zeitweise zwischen einem Stegblech (6) und einem Kolben (18) zum Übertragen der Bremsbetätigungskraft unabhängig von der Strebe (24) angeordnet ist, wobei das Zwischenglied (46) mindestens teilweise bewegbar ist, solange die Bremsbetätigungskraft einen vorgebbaren Betrag nicht überschreitet, und als Sperrglied (46; 246; 350, 360; 446) wirkt, welches so mit einem den Abschnitt des einen Strebenteils verstellenden Nachstellglied (34, 234, 334, 434) verbindbar ist, dass bei Erreichen eines vorgebbaren Betrages für die Bremsbetätigungskraft eine Bewegung des verstellbaren Abschnittes zur Veränderung der Länge der Strebe (24; 424) verhindert ist, dadurch gekennzeichnet, dass die dem Kolben (18) der hydraulischen Betätigungsvorrichtung (16) zugewandte Seite des Sperrgliedes im Ruhezustand der Bremse einen Überstand (a) gegenüber der dem Kolben (18) zugewandten Seite des Stegbleches (6) aufweist, so dass die Bremsbetätigungskraft von dem Kolben (18) über das Sperrglied (46; 246; 350; 446) auf das Stegblech (6) solange übertragbar ist, bis der durch die Bewegung des Sperrgliedes (46; 246; 350, 446) verkleinerte Überstand (a) aufgehoben ist und der Kolben (18) an der ihm gegenüberliegenden Seite des Stegbleches anliegt, ein wärmeempfindliches Federelement (50; 250; 350) mit dem Sperrglied (46; 246; 350, 360, 446) zusammenwirkt, dessen Steifigkeit und/oder Form mit zunehmender Temperatur der Bremse so veränderbar ist, dass sich eine Bewegung des Sperrgliedes (46; 246; 350, 446) derart ergibt, dass der Überstand (a) verkleinert ist und das Sperrglied (46; 246; 350; 360; 446) so mit dem den Abschnitt des einen Strebenteils verstellenden Nachstellglied (34; 234; 334; 434) verbindbar ist, dass bei Erreichen des vorgebbaren Betrags für die Bremsbetätigungskraft und/oder eines vorgebbaren Wertes für die Temperatur die Bewegung des verstellbaren Abschnittes zur Veränderung der Länge der Strebe (24; 424) verhindert ist.

2. Selbsttätige Nachstellvorrichtung nach Anspruch 1, dadurch gekennzeichnet, dass der Überstand (a) im Ruhezustand der Bremse etwa 0,2 mm beträgt.

3. Selbsttätige Nachstellvorrichtung nach einem der Ansprüche 1 oder 2, dadurch gekennzeichnet, dass die Strebe (24) eine Spindel (26) mit einem Gewindeabschnitt als verstellbarem Abschnitt aufweist, der über ein Ritzel (28) in Richtung der Längsachse der Strebe (24) längenveränderbar ist, sich an der der Spindel (26) gegenüberliegenden Seite des Ritzels (28) eine Hülse (30) der Strebe (24) anschliesst, das Nachstellglied ein mit dem Stegblech (6) schwenkbar verbundener Nachstellhebel (34) ist, der in das Ritzel (28) zur Veränderung der Länge der Strebe (24) eingreift, das Sperrglied ein Sperrhebel (46; 246) ist, der mit dem Stegblech (6) über einen Bolzen (44) schwenkbar verbunden ist, an dem Ende des Sperrhebels (46; 246) das dem den Überstand (a) bildenden Ende gegenüberliegt, ein Sperrzahn (48; 248) ausgebildet ist, an der dem Sperrzahn (48; 248) gegenüberliegenden Seite des Nachstellhebels (34, 234) eine Sperrverzahnung (38; 238) ausgebildet ist, in die der Sperrzahn (48; 248) zur Verhinderung des Schwenkens des Nachstellhebels (34; 234) gegen die Wirkung des Federelementes (50; 260) bei Erreichen eines vorgebbaren Wertes für die Bremsbetätigungskraft und/oder der Temperatur eingreift.

4. Selbsttätige Nachstellvorrichtung nach Anspruch 3, dadurch gekennzeichnet, dass das Federelement (50) im kalten Zustand vorgespannt ist und aus einem oval gebogenen Bimetallstreifen besteht, die beiden Enden des Bimetallstreifens einander im Abstand überlappend eine Längsseite des Ovals bilden, die über einen Bolzen (36) mit dem Stegblech (6) verbunden ist und die gegenüberliegende Längsseite des Ovals an dem Sperrhebel (46) anliegt.

5. Selbsttätige Nachstellvorrichtung nach Anspruch 4, dadurch gekennzeichnet, dass der Sperrhebel (46) an dem dem Sperrzahn (48) benachbarten Ende einen umgebogenen Bereich aufweist, der als Anschlag (56) für eine an der dem Federelement (50) gegenüberliegenden Seite des Sperrhebels (46) mit dem Stegblech (6) verbundenen Anschlagbolzen (58) ausgebildet ist.

6. Selbsttätige Nachstellvorrichtung nach Anspruch 5, dadurch gekennzeichnet, dass der Sperrhebel (46) an der dem Federelement (50) zugewandten Seite einen Ansatz (54) für eine Verbindung mit dem Federelement (50) aufweist.

7. Selbsttätige Nachstellvorrichtung nach Anspruch 6, dadurch gekennzeichnet, dass die an dem Sperrhebel (46) anliegende Längsseite des Federelements (50) eine Aussparung aufweist, in die der Ansatz (54) des Sperrhebels (46) eingreift, und dass in dem äusseren Endbereich des Bimetallstreifens eine Öse (52) zur Aufnahme des Bolzens (36) für die Befestigung des Federelements (50) mit dem Stegblech (6) ausgebildet ist.

8. Selbsttätige Nachstellvorrichtung nach einem der Ansprüche 1 bis 3, dadurch gekennzeichnet, dass eine Torsionsfeder (260) mit dem Sperrhebel (246) zusammenwirkt, und das wärmeempfindliche Federelement mehrere in hintereinander angeordnete vorgespannte Bimetall-Tellerfedern (250) aufweist, die zwischen einem Belagträgerblech (8) und einem Teil des Sperrhebels (246) angeordnet sind und deren axiale Länge mit steigender Temperatur zunimmt, wobei der Sperrzahn (248) elastisch mit dem Sperrhebel (246) verbunden ist.

9. Selbsttätige Nachstellvorrichtung nach einem der Ansprüche 1 oder 2, dadurch gekennzeichnet, dass das Sperrglied das wärmeempfindliche Federelement (350) aufweist, das vorgespannt und an einer Seite mit dem Stegblech (6) fest verbunden ist, sowie eine Verbindungsstange (360), die mit einem Ende mit dem Nachstellhebel (334) verbunden ist, und deren dem Nachstellhebel (334) gegenüberliegender Endabschnitt durch einen Bereich des Federelementes (350) geführt und in diesem klemmbar ist, wenn der Wert der Bremsbetätigungskraft und/oder der Temperatur einen vorgebbaren Wert erreicht hat, so dass ein Schwenken des Nachstellhebels (334) verhindert ist.

10. Selbsttätige Nachstellvorrichtung nach Anspruch 9, dadurch gekennzeichnet, dass das Federelement (350) einen aus einem Bimetallstreifen gebogenen U-förmigen Bereich (364) zur Aufnahme eines Endabschnittes der Verbindungsstange (360) aufweist, der mit seiner Öffnung dem Stegblech (6) zugewandt ist, und dessen äusserer Metallstreifen sich mit zunehmender Temperatur stärker als der innere Metallstreifen ausdehnt, sich an jeden der beiden Schenkel des U-förmigen Bereiches (364) ein zu dem Stegblech (6) paralleler Flansch (366, 368) anschliesst, von denen der eine mit dem Stegblech (6) vernietet ist und der gegen den Kolben (18) gerichtete andere Flansch (368) den Überstand (a) bildet und innerhalb des U-förmigen Bereichs (350) ein Abschnitt vorhanden ist, dessen den Flanschen (366, 368) gegenüberliegendes Ende so geöffnet ist, dass sich Lippen (372, 374) bis zu den Flanschen (366, 368) erstrekken, die schalenförmig ausgebildet und im Abstand zueinander so angeordnet sind, dass die konvex gekrümmten Seiten der Lippen (372; 374) einander zugewandt sind, so dass nach einer Verringerung des Abstandes zwischen den Lippen (372, 374) die Verbindungsstange klemmbar ist.

11. Selbsttätige Nachstellvorrichtung nach Anspruch 10, dadurch gekennzeichnet, dass das Federelement (350) durch einen mit dem Stegblech (6) verbundenen Stift, der in eine Aussparung des dem Kolben (18) zugewandten Flansches (368) eingreift, vorgespannt ist.

12. Selbsttätige Nachstellvorrichtung nach einem der Ansprüche 1 oder 2, dadurch gekennzeichnet, dass die Strebe (424) ein als Nachstellglied ausgebildetes scheibenförmiges erstes Strebenteil (434) aufweist, das in einer Richtung quer zur Längsrichtung der Strebe (424) mit einem stabförmigen zweiten Strebenteil (435) schwenkbar und gegen die Kraft einer Feder verschiebbar verbunden ist, das erste Strebenteil (434) eine zu der Schwenkachse (C) exzentrische Aussenfläche hat mit einem geriffelten Abschnitt, der an einen geriffelten Bereich (482) des zweiten Strebenteils (435) im Ruhezustand der Bremse anliegt, dass der erste Strebenteil (434) über einen Arm, der in eine Aussparung des Stegbleches (6) eingreift, beim Betätigen der Bremse schwenkbar ist, das Sperrglied (446) schwenkbar mit dem Stegblech (6) verbunden und einen Sperrzahn (448) aufweist, der mit einer Sperrverzahnung (438) des ersten Strebenteils (434) einrastbar ist, um ein Schwenken des ersten Strebenteils (434) zu verhindern und das wärmeempfindliche Federelement (50) an dem Steg (6) eingelenkt ist und gegen das vorgespannte Sperrglied (446) wirkt.

**Claims**

1. An automatic adjusting device for a brake, especially a motor vehicle brake, in which a strut (24) is connected functionally in parallel to a brake actuator (16) and has an effective length which depends on the relative position of two strut members (26, 30) adjustable with respect to each other, one (26) of which has an adjustable portion by which on actuation of the brake the strut (24) is extendable and which cooperates with at least one intermediate member (46) disposed at least at times between a web plate (6) and a piston (18) for transmitting the brake actuating force independently of the strut (24), said intermediate member (46) being at least partially movable as long as the brake actuating force does not exceed a predeterminable amount and acting as locking member (46; 246; 360; 356; 446) which is connectable to an adjusting member (34, 234, 334, 434) adjusting the portion of the one strut member in such a manner that on reaching a predeterminable magnitude for the brake actuating force a movement of the adjustable portion for varying the length of the strut (24; 424) is prevented, characterized in that the side of the locking member facing the piston (18) of the hydraulic actuator (16) has a salient portion (a) with respect to the side of the web plate (6) facing the piston (18), when the brake is at rest, so that the brake actuating force is transmissible from the piston (18) to the web plate (6) by way of the locking member (46; 346; 350; 446) until the salient portion (a) which is being reduced by the movement of the locking member (46; 246; 350; 446) has been cancelled and the piston (18) abuts against the opposing side of the web plate, a heat sensitive spring element (50; 250; 350) cooperates with the locking member (46; 246; 350, 360, 446), the rigidity and/or the shape of the spring being variable with rising temperature of the brake such that movement of the locking member (46; 246; 350, 446) results whereby the salient portion (a) is reduced, the locking member (46; 246; 350, 360, 446) is connectable to the adjusting member (34, 234, 334, 434) adjusting the portion of the one strut member such that movement of the adjustable portion for varying the length of the strut (24; 424) is prevented upon reaching of a predeterminable amount for the brake actuating force and/or a predeterminable value for the temperature.

2. An automatic adjusting device according to claim 1, characterized in that the salient portion (a) amounts to about 0.2 mm when the brake is at rest.

3. An automatic adjusting device according to one of claims 1 or 2, characterized in that the strut (24) comprises a spindle (26) having a thread section as the adjustable portion which is variable in length in the direction of the longitudinal axis of the strut (24) by means of a pinion (28), a sleeve (30) of the strut (24) borders on the side of the pinion (28) opposite the spindle (26), the adjusting member is an adjusting lever (34) pivotably connected with the web plate (6) and engaging in the pinion (28) to vary the length of the strut (24), the locking member is a locking lever (46; 246) pivotably connected to the web plate (6) by a bolt (44), a locking tooth (48; 248) is formed at the end of the locking lever (46; 246) opposite the end forming the salient portion (a), a locking serration (38; 238) is formed at the side of the adjusting lever (34, 234) opposite the locking tooth (48; 248) and engaged by the locking tooth (48; 248) to prevent pivoting of the adjusting lever (34; 234) against the action of the spring element (50; 260) upon reaching a predeterminable value for the brake actuating force and/or the temperature.

4. An automatic adjusting device according to claim 3, characterized in that the spring element (50) is biased in cold condition and consists of a bimetal strip bent to oval shape, the two ends of the bimetal strip constitute one longitudinal side of the oval, overlapping each other at a distance, said side being connected to the web plate (6) by a bolt (36), and the opposite longitudinal side of the oval abuts against the locking lever (46).

5. An automatic adjusting device according to claim 4, characterized in that the locking lever (46) has a bent portion at the end adjacent the locking tooth (48), which portion serves as stop (56) for an abutment bolt (58) connected to the web plate (6) at the side of the locking lever (46) opposite the spring element (50).

6. An automatic adjusting device according to claim 5, characterized in that the locking lever (46) comprises a projection (54) for connection to the spring element (50) at the side facing the spring element (50).

7. An automatic adjusting device according to claim 6, characterized in that the longitudinal side of the spring element (50) abuting against the locking lever (46) comprises a recess which is engaged by the projection (54) of the locking lever (46), and that an eye (52) receiving the bolt (36) for fixing the spring element (50) with the web plate (6) is formed in the outer end portion of the bimetal strip.

8. An automatic adjusting device according to any one of claims 1 to 3, characterized in that a torsion spring (260) cooperates with the locking lever (246) and the heat sensitive spring element comprises a plurality of biased bimetal plate springs (250) arranged behind one another which are disposed between a lining backplate (8) and a part of the locking lever (246) and the axial length of which increases at rising temperature, the locking tooth (248) being connected elastically with the locking lever (246).

9. An automatic adjusting device according to one of claims 1 or 2, characterized in that the locking member comprises the spring element (350) which is biased and firmly connected at one side with the web plate (6) as well as a connecting rod (360) which is connected at one end with the adjusting lever (334) and the end portion of which opposite the adjusting lever (334) is passed through a region of the spring element (350) and adapted to be clamped in the same when the value of the brake actuating force and/or the temperature has reached a predeterminable value so that pivoting of the adjusting lever (334) is prevented.

10. An automatic adjusting device according to claim 9, characterized in that the spring element (350) comprises a U-shaped portion (364) bent of a bimetal strip to receive an end portion of the connecting rod (360), the opening thereof facing the web plate (6) and the outer metal strip expanding more than the inner metal strip at rising temperature, each of the two legs of the U-shaped portion (364) is followed by a flange (366, 368) which extend parallel to the web plate (6) and one of which is riveted to the web plate (6), while the other flange (368) directed toward the piston (18) forms the salient portion (a), and there is a section within the U-shaped portion (350) whose end located opposite the flanges (366, 368) is opened such that lips (372, 374) extend as far as the flanges (366, 368) which lips are of shell shape and spaced from each other such that the convexly curved sides of the lips (372; 374) face each other so that the connecting rod is adapted to be clamped after a reduction of the spacing between the lips (372, 374).

11. An automatic adjusting device according to claim 10, characterized in that the spring element (350) is biased by a pin connected to the web plate (6) and engaging in a recess of the flange (368) facing the piston (18).

12. An automatic adjusting device according to one of claims 1 or 2, characterized in that the strut (424) comprises a disc-shaped first strut member (434) designed as adjusting member and pivotably connected to a rod-shaped second strut member (435) in a direction transversely of the longitudinal direction of the strut (424) and displaceable against the pressure of a spring, the first strut member (434) has an outer surface which is eccentric with respect to the pivot axis (C) and has a knurled section which is in engagement with a knurled section (482) of the second strut member (435) when the brake is at rest, that the first strut member (434) is pivotable by means of an arm engaging in a recess of the web plate (6), upon actuation of the brake, the locking member (446) is pivotably connected with the web plate (6) and comprises a locking tooth (448) adapted to be caught in a locking serration (438) of the first strut member (434) to prevent pivoting of the first strut member (434), and the heat sensitive spring element (50) is guided at the web (6) and acts against the biased locking member (446).

Revendications

1. Dispositif automatique de rattrapage de jeu pour un frein, notamment un frein d'un véhicule automobile, dans lequel, en fonctionnement, en parallèle avec un dispositif (16) d'actionnement du frein se trouve montée une entretoise (24), dont la longueur active dépend de la position relative de deux éléments (26, 30) de l'entretoise, qui sont déplaçables l'un par rapport à l'autre et dont un premier (26) possède une section déplaçable avec laquelle l'entretoise (24) peut être allongée lors de l'actionnement du frein et qui coopère avec au moins un organe intermédiaire (46) qui est disposé au moins par intervalles entre une tôle formant traverse (6) et un piston (18) pour la transmission de la force d'actionnement du frein indépendamment de l'entretoise (24), l'organe intermédiaire (46) étant déplaçable au moins partiellement, tant que la force d'actionnement du frein ne dépasse pas une valeur pouvant être prédéterminée, et agissant en tant qu'organe de blocage (46; 246; 350, 360; 446) qui peut être relié à un organe de rattrapage de jeu (34; 234; 334; 434) déplaçant la section du premier élément de l'entretoise, de manière à empêcher un déplacement de la section déplaçable servant à modifier la longueur de l'entretoise (24; 424), lorsqu'une valeur pouvant être prédéterminée de la force d'actionnement du frein est atteinte, caractérisé par le fait que le côté de l'organe de blocage, tourné vers le piston (18) du dispositif d'actionnement hydraulique (16), fait saillie sur une distance de débordement (a) par rapport au côté de la tôle formant traverse (6), tourné vers le piston (18), de sorte que la force d'actionnement du frein peut être transmise par le piston (18) à la tôle formant traverse (6), par l'intermédiaire de l'organe de blocage (46; 246; 350; 446) jusqu'à ce que la distance de débordement (a) réduite par le déplacement de l'organe de blocage (46; 246; 350; 446) soit supprimée et que le piston (18) s'applique contre le côté, qui lui fait face, de la tôle formant traverse, et qu'avec l'organe de blocage (46; 246; 350, 360; 446) coopère un élément de ressort thermosensible (50; 250; 350), dont la raideur et/ou la forme est modifiable lorsque la température du frein augmente, de telle sorte qu'on obtient un déplacement de l'organe de blocage (46; 246; 350; 446) tel que la distance de débordement (a) est réduite et que l'organe de blocage (46; 246; 350, 360; 446) peut être relié à l'organe de rattrapage de jeu (34; 234; 334; 434), qui déplace la section du premier élément de l'entretoise, de manière à empêcher le déplacement de la section déplaçable servant à modifier la longueur de l'entretoise (24; 424), lorsque la valeur pouvant être prédéterminée de la force d'actionnement du frein et/ou une valeur pouvant être prédéterminée de la température est atteinte.

2. Dispositif automatique de rattrapage de jeu selon la revendication 1, caractérisé en ce que la distance de débordement (a) est égale à environ 0,2 mm, lorsque le frein est au repos.

3. Dispositif automatique de rattrapage de jeu selon l'une des revendications 1 ou 2, caractérisé en ce que l'entretoise (24) comporte une broche (26) munie d'une section filetée qui constitue la section déplaçable dont la longueur peut être modifiée dans la direction de l'axe longitudinal de l'entretoise (24), par l'intermédiaire d'un pignon (28), une douille (30) de l'entretoise (24) se raccorde au côté du pignon (28), situé à l'opposé de la broche (26), l'organe de rattrapage de jeu est un levier de rattrapage de jeu (34) qui est relié de manière à pouvoir pivoter à la tôle formant traverse (6) et engrène avec le pignon (28) pour modifier la longueur de l'entretoise (24), l'organe de blocage est un levier de blocage (46; 246) qui est relié de manière à pouvoir pivoter à la tôle formant traverse (6) par l'intermédiaire d'un axe (44), une dent de blocage (48; 248) est formée à l'extrémité du levier de blocage (46; 246), qui est située à l'opposé de l'extrémité fournissant la distance de débordement (a), sur le côté du levier de rattrapage de jeu (34; 234), situé en vis-à-vis de la dent de blocage (48; 248) se trouve ménagée une denture de blocage (38; 238), dans laquelle la dent de blocage (48; 248) s'engage de manière à empêcher le pivotement du levier de rattrapage de jeu (34; 234) à l'encontre de l'action de l'élément de ressort (50; 260) lorsqu'une valeur pouvant être prédéterminée de la force d'actionnement du frein et/ou de la température est atteinte.

4. Dispositif automatique de rattrapage de jeu selon la revendication 3, caractérisé en ce que l'élément de ressort (50) est pécontraint à l'état froid et est constitué par une bande bimétallique recourbée avec une forme ovale, les deux extrémités de la bande bimétallique forment, dans une position de chevauchement réciproque à une certaine distance, un côté longitudinal de l'ovale, qui est relié par l'intermédiaire d'un axe (36) à la tôle formant traverse (6), et le côté longitudinal opposé de l'ovale s'applique contre le levier de blocage (46).

5. Dispositif automatique de rattrapage de jeu suivant la revendication 4, caractérisé en ce que le levier de blocage (46) comporte, au niveau de l'extrémité voisine de la dent de blocage (48), une partie coudée qui est réalisée sous la forme d'une butée (56) pour un axe de butée (58) relié à la tôle formant traverse (6), sur le côté du levier de blocage (46), situé à l'opposé de l'élément de ressort (50).

6. Dispositif automatique de rattrapage de jeu selon la revendication 5, caractérisé en ce que le levier de blocage (46) comporte, sur son côté tourné vers l'élément de ressort (50), un appendice saillant (54) permettant une liaison avec l'élément de ressort (50).

7. Dispositif automatique de rattrapage de jeu selon la revendication 6, caractérisé en ce que le côté longitudinal de l'élément de ressort (50), appliqué contre le levier de blocage (46), possède un évidement, dans lequel s'engage l'appendice saillant (54) du levier de blocage (46), et qu'un oeillet (52) servant à recevoir l'axe (36) servant à la fixation de l'élément de ressort (50) à la tôle formant traverse (6) est formé dans la zone d'extrémité extérieure de la bande bimétallique.

8. Dispositif automatique de rattrapage de jeu selon l'une des revendications 1 à 3, caractérisé en ce qu'un ressort de torsion (260) coopère avec le levier de blocage (246), et que l'élément de ressort thermosensible comporte plusieurs ressorts Belleville bimétalliques (250) précontraints, qui sont disposés les uns derrière les autres entre une tôle porte-garniture (8) et une partie du levier de blocage (246) et dont la longueur axiale augmente lorsque la température augmente, la dent de blocage (248) étant reliée élastiquement au levier de blocage (246).

9. Dispositif automatique de rattrapage de jeu selon l'une des revendications 1 ou 2, caractérisé en ce que l'organe de blocage comporte l'élément de ressort thermosensible (350), qui est précontraint et est relié rigidement, sur un côté, à la tôle formant traverse (6), ainsi qu'une barre de liaison (360), dont une extrémité est reliée au levier de rattrapage de jeu (334), et dont la section d'extrémité, située à l'opposé du levier de rattrapage de jeu (334) s'étend à travers une partie de l'élément de ressort (350) et peut être bloquée par serrage dans cette dernière lorsque la valeur de la force d'actionnement du frein et/ou de la température a atteint une valeur pouvant être prédéterminée, de sorte qu'un pivotement du levier de rattrapage de jeu (334) est empêché.

10. Dispositif automatique de rattrapage de jeu selon la revendication 9, caractérisé en ce que l'élément de ressort (350) possède une partie en forme de U (364) qui est formée d'une bande bimétallique repliée et sert à recevoir une section d'extrémité de la barre de liaison (360) et dont l'ouverture est tournée vers la tôle formant traverse (6) et dont la bande métallique extérieure se dilate plus fortement que la bande métallique intérieure lorsque la température augmente, à chacune des deux branches de la partie en forme de U (364) se raccorde une bride (366, 368), qui est parallèle à la tôle formant traverse (6), une première de ces brides étant fixée par rivetage à la tôle formant traverse (6), tandis que l'autre bride (368) dirigée vers le piston (18) crée la distance de débordement (a), et la partie en forme de U (350) comporte une section dont l'extrémité située à l'opposé des brides (366, 368) est ouverte de sorte que jusqu'aux brides (366, 368) s'étendent des lèvres (372, 374) qui sont réalisées sous la forme de coques et sont disposées à distance l'une de l'autre de telle sorte que les faces convexes des lèvres (372, 374) sont tournées l'une vers l'autre de sorte qu'après une réduction de la distance entre les lèvres (372, 374), la barre de liaison peut être bloquée par serrage.

11. Dispositif automatique de rattrapage de jeu selon la revendication 10, caractérisé en ce que l'élément de ressort (305) est précontraint au moyen d'une tige qui est reliée à la tôle formant traverse (6) et s'engage dans un évidement de la bride (368) tournée vers le piston (18).

12. Dispositif automatique de rattrapage de jeu selon l'une des revendications 1 ou 2, caractérisé en ce que l'entretoise (424) comporte un premier élément (434) en forme de disque, qui est agencé en tant qu'organe de rattrapage de jeu et est relié à un second élément en forme de barre (435) de manière à pouvoir pivoter dans une direction transversale par rapport à la direction longitudinale de l'entretoise (424) et à pouvoir être déplacé à l'encontre de la force d'un ressort, le premier élément (434) de l'entretoise possède une surface extérieure excentrée par rapport à l'axe de pivotement (C) et est munie d'une section moletée, qui s'applique contre une partie moletée (482) du second élément (435) de l'entretoise, lorsque le frein est au repos, que le premier élément (434) de l'entretoise peut être amené à pivoter, lors de l'actionnement du frein, par l'intermédiaire d'un bras s'engageant dans un évidement de la tôle formant traverse (6), l'organe de blocage (446) est relié, de manière à pouvoir pivoter, à la tôle formant traverse (6) et comporte une dent de blocage (448), qui peut engrener avec une denture de blocage (438) du premier élément (434) de l'entretoise, de manière à empêcher un pivotement du premier élément (434) de l'entretoise, et l'élément de ressort thermosensible (50) est articulé sur la traverse (6) et agit à l'encontre de l'organe de blocage précontraint (446).

FIG.1

EP 0195081 B1

FIG.2

FIG.3

EP 0195081 B1

FIG. 4

FIG.5

FIG.6

FIG.7